Europäisches Patentamt

European Patent Office

Office européen des brevets

(11) Numéro de publication: **0 057 348**
**B1**

(19)

(12) **FASCICULE DE BREVET EUROPEEN**

(45) Date de publication du fascicule du brevet: **19.09.84**

(21) Numéro de dépôt: **82100090.8**

(22) Date de dépôt: **08.01.82**

(51) Int. Cl.³: **F 16 C 19/18,** F 16 C 33/60, F 16 C 43/06

(54) **Palier à roulement à contact oblique à deux rangées d'éléments roulants et procédé de montage.**

(30) Priorité: **30.01.81 FR 8101889**

(43) Date de publication de la demande:
**11.08.82 Bulletin 82/32**

(45) Mention de la délivrance du brevet:
**19.09.84 Bulletin 84/38**

(84) Etats contractants désignés:
**DE GB IT SE**

(56) Documents cités:
**FR-A-2 138 861**
**FR-A-2 347 567**
**FR-A-2 372 988**
**GB-A- 131 744**
**GB-A- 542 669**
**US-A-1 884 925**

(73) Titulaire: **SKF COMPAGNIE D'APPLICATIONS MECANIQUES Société anonyme dite:**
**1, Avenue Newton**
**F-92142 Clamart (FR)**

(72) Inventeur: **Fillion, Marcel**
**35 rue Emile Eudes**
**F-94140 Alfortville (FR)**
Inventeur: **Monville, Jean-Michel**
**17 rue Albert Bayet**
**F-75013 Paris (FR)**

(74) Mandataire: **Casalonga, Axel et al**
**BUREAU D.A. CASALONGA OFFICE JOSSE & PETIT Baaderstrasse 12-14**
**D-8000 München 5 (DE)**

Courier Press, Leamington Spa, England.

EP 0 057 348 B1

### Description

La présente invention a pour objet un palier à roulement à contact oblique comportant deux rangées d'éléments roulants dont la structure est telle que la capacité de charge du roulement soit augmentée sans modification de dimensions du roulement. L'invention s'applique à des paliers à roulement à contact oblique du type dans lequel les deux rangées d'éléments roulants sont montées selon une disposition en O, c'est-à-dire dans laquelle les lignes d'action des charges sur les éléments roulants d'une rangée convergent dans la direction opposée à celles de l'autre rangée.

On a déjà prévu dans le brevet français 2.372.988, appliqué notamment à un montage pour roue de véhicule automobile, de réaliser un tel palier à roulement à contact oblique à deux rangées d'éléments de roulement avec une bague extérieure en deux pièces. La réalisation par exemple de la bague extérieure en deux parties, permet lors du montage de mettre en place sur l'une des rangées d'éléments roulants un nombre plus important d'éléments roulants, cette phase de montage se faisant avant que la deuxième partie de la bague extérieure ne soit montée. Par contre, dans cette réalisation, la deuxième rangée d'éléments roulants ne peut être garnie que sur environ la moitié de sa périphérie d'éléments roulants, le remplissage de ces derniers se faisant en excentrant la bague extérieure par rapport à la bague interne.

On obtient donc finalement un roulement à contact oblique à deux rangées d'éléments roulants dont l'une des rangées comporte un nombre inférieur d'éléments roulants. Il en résulte une certaine faiblesse du palier à roulement et une dissymétrie dans la résistance aux efforts qui peut s'avérer défavorable dans certaines applications.

Le brevet américain 1.884.925 décrit un palier à roulement muni de deux rangées de rouleaux coniques comportant également une bague extérieure en deux parties afin de permettre le montage de la deuxième rangée d'éléments roulants. Une bague entretoise en deux parties est ensuite montée entre les deux parties de bague extérieure pour terminer le montage. Si un tel mode de réalisation permet bien de monter le même nombre d'éléments roulants sur les deux rangées du palier à roulement, il nécessite cependant de rectifier la bague entretoise et les deux faces frontales en regard des parties de bague extérieure à une cote rigoureuse afin de déterminer avec précision le jeu du roulement. De plus, la bague entretoise doit être maintenue en place par des moyens extérieurs supplémentaires.

La présente invention a pour objet la réalisation d'un tel palier à roulement à contact oblique à deux rangées d'éléments roulants qui permette l'introduction d'un nombre identique d'éléments roulants sur les deux rangées sans nécessiter l'adjonction d'aucun élément supplémentaire d'entretoisement et tout en simplifiant considérablement les opérations d'usinage.

Le palier à roulement à contact oblique à deux rangées d'éléments roulants selon l'invention comporte une bague extérieure de palier en deux parties maintenues en contact respectif selon un plan de joint radial. Selon l'invention, les surfaces frontales en regard des deux parties de la bague de palier présentent chacune au moins deux bossages axiaux usinés avec précision de façon à constituer une face radiale de référence. Les deux bossages sont séparés par des évidements axiaux adaptés pour recevoir un bossage axial correspondant de l'autre partie de bague de palier. De cette manière, il est possible, après rotation relative des deux parties de bague de palier, de monter les éléments roulants de la deuxième rangée, en nombre identique aux éléments roulants de la première rangée. Le palier à roulement selon l'invention comporte en outre un organe périphérique d'étanchéité coopérant avec la bague de palier en deux parties de façon à obturer les évidements en regard des deux parties de bague de palier lorsque les bossages correspondants des deux parties se trouvent en contact par leur face de référence usinée évitant ainsi toute pénétration d'éléments extérieurs tels que poussière, saletés, etc... à travers les orifices formés par les différents évidements axiaux en regard les uns des autres.

Pour faciliter la rotation relative des deux parties de bague de palier lors du montage, chaque bossage est de préférence relié aux évidements adjacents par une portion inclinée.

Les deux parties de bague de palier peuvent être avantageusement maintenues en position par au moins deux goupilles axiales assurant la position précise des bossages en contact respectif après le montage.

Dans un mode de réalisation préféré de l'invention plus particulièrement adapté au cas d'une bague externe en deux parties, l'organe d'étanchéité est simplement réalisé par un anneau élastique, par exemple en caoutchouc, enserrant la bague externe à l'endroit du plan de joint.

L'organe d'étanchéité est de préférence muni d'au moins une cale de verrouillage adaptée pour pénétrer dans l'espace laissé entre deux évidements en regard. Lorsque l'organe d'étanchéité est un anneau élastique, ladite cale de verrouillage peut être constituée par une excroissance de l'anneau élastique. Dans un autre mode de réalisation, l'organe d'étanchéité peut être constitué par un anneau fendu réalisé en matière plastique moulée et pouvant être encliqueté sur les deux parties de la bague externe de palier.

Bien entendu, l'invention s'applique exclusivement à une disposition en O des deux rangées d'éléments de roulement afin d'éviter que les charges sollicitant le roulement n'aient tendance à écarter l'une de l'autre les deux parties de bague de palier.

Le procédé de montage du palier à roulement selon l'invention consiste à opérer de la manière suivante:

On monte tout d'abord la première rangée d'éléments de roulement, puis la première partie de la bague du palier destinée à coopérer avec la première rangée d'éléments de roulement.

On monte ensuite la deuxième partie de la bague du palier en lui faisant subir une rotation dans un sens de façon que les bossages axiaux de chaque partie pénètrent dans les évidements de l'autre partie. On monte la deuxième rangée d'éléments roulants comportant le même nombre d'éléments roulants que la première rangée déjà montée.

On fait enfin subir à la deuxième partie de la bague du palier une rotation dans l'autre sens ce qui entraîne un écartement des deux parties de bague de palier, les faces usinées avec précision des bossages respectifs des deux parties venant en contact.

La présente invention sera mieux comprise à l'étude de la description détaillée de deux modes de réalisation faite à titre d'exemples nullement limitatifs et illustrée par les dessins annexés, sur lesquels:

la fig. 1 est une vue en coupe axiale d'un premier mode de réalisation d'un palier à roulement à contact oblique à deux rangées d'éléments roulants selon l'invention comportant une bague extérieure en deux parties;

la fig. 2 est une vue extérieure identique du palier de la fig. 1 montrant en particulier des espaces laissés entre les évidements respectifs des deux parties de bague extérieure;

la fig. 3 est une vue en coupe axiale identique à la fig. 1 montrant cependant la position des deux parties de bague extérieure lors d'une phase du montage du palier;

la fig. 4 est une vue en coupe axiale d'un autre mode de réalisation d'un palier selon l'invention en coupe selon IV—IV de la fig. 5; et

la fig. 5 est une vue en coupe selon V—V de la fig. 4 dans laquelle les billes n'ont pas été représentées afin de simplifier la figure.

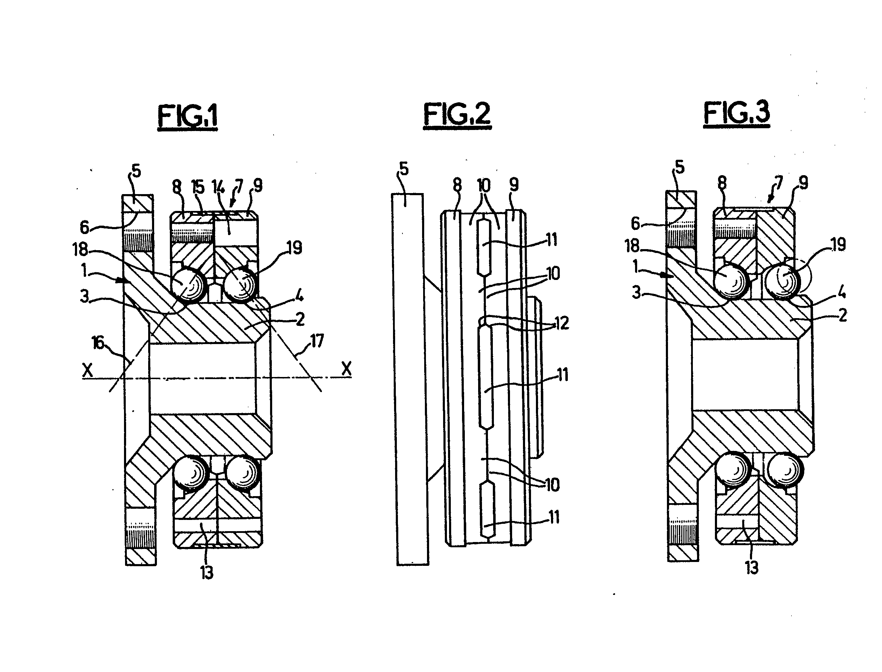

A titre d'exemple nullement limitatif, le palier à roulement selon l'invention de la fig. 1 est un palier à deux rangées de billes à contact oblique constituant un ensemble de montage pour roue de véhicule automobile dans laquelle un moyeu de roue et un disque de frein non représentés peuvent être montés sur une bride solidaire de la bague intérieure.

Tel qu'il est représenté sur les fig. 1 à 3, on voit que la bague intérieure 1 comprend une portion de roulement 2 dont la surface externe est usinée sous la forme de deux pistes de roulement 3 et 4. Une bride radiale 5 comportant des trous taraudés 6 permet la fixation par vis d'un disque de frein et d'un moyeu de roue non représentés.

La bague extérieure 7 est constituée par deux parties ou demi-bagues référencées respectivement 8 et 9 qui, dans l'exemple illustré, sont pratiquement identiques et symétriques l'une de l'autre. Les deux parties 8 et 9 sont réalisées de préférence selon les techniques connues de forgeage, matriçage ou frittage. Les deux faces frontales en regard des parties de bague externe 8 et 9 présentent un profil visible notamment en vue extérieure sur la fig. 2 constitué par la succession de bossages axiaux 10 séparés par des évidements axiaux 11. Chaque évidement axial 11 de l'une des parties de bague extérieure est adapté pour recevoir l'un des bossages 10 de l'autre partie de bague extérieure. Dans ces conditions, les dimensions dans le sens périphérique des évidements 11 sont supérieures ou égales aux dimensions dans le sens périphérique des bossages 10. Dans le sens axial, la profondeur des évidements 11 est égale ou supérieure à la dimension en saillie des bossages 10 de façon à pouvoir recevoir ceux-ci.

La face frontale externe des bossages 10 constituant le plan de joint est usinée avec précision et constitue dans tous les cas la face de référence des deux demi-bagues 8 et 9. Les évidements 11 restent au contraire brut de fabrication.

La face de fond de chaque évidement 11 est raccordée à chaque bossage adjacent 10 par une portion inclinée 12 qui facilite la rotation relative des deux demi-bagues 8 et 9.

Comme on peut le voir sur la fig. 1, le maintien en position angulaire relatif des demi-bagues 8 et 9 dans la position illustrée où les faces frontales des bossages 10 des deux demi-bagues 8 et 9 sont en contact, est assuré par des goupilles axiales montées dans des trous traversant 13. La fixation de l'ensemble par exemple sur un bras de suspension de véhicule automobile se fait par serrage au moyen de vis axiales coopérant avec les perçages 14 taraudés dans la demi-bague 8.

Le montage se complète par un anneau élastique d'étanchéité 15 dont le diamètre extérieur est de préférence inférieur au diamètre extérieur des demi-bagues 8 et 9 et qui vient enserrer la bague extérieure 7 à l'endroit du plan de joint en venant avantageusement se loger dans une rainure périphérique. L'anneau élastique 15, réalisé par exemple en caoutchouc, et qui n'a pas été représenté sur la fig. 2, vient donc obturer les espaces laissés libres par les évidements en regard 11 des deux demi-bagues 8 et 9.

On notera que les axes de contact 16 et 17 de chacune des rangées de billes 18 et 19 sont inclinés par rapport à l'axe XX du palier dans des directions opposées. Cette disposition en O permet d'éviter que les efforts auxquels le palier est soumis ne tendent à écarter les deux demi-bagues 8 et 9.

L'usinage des pistes de roulement des deux demi-bagues 8 et 9 peut se faire simultanément, les deux demi-bagues étant maintenues ensemble par les goupilles axiales précitées.

Le montage du palier illustré sur les fig. 1 et 2 se fait de la manière suivante visible sur la fig.

3. La première rangée de billes 18 maintenue par sa cage non représentée est tout d'abord mise en place sur la bague intérieure 2. On monte ensuite la première demi-bague 8, puis la deuxième demi-bague 9 en lui faisant subir une rotation dans un sens de façon que ses bossages axiaux 10 pénètrent dans les évidements 11 de la première demi-bague 8 tandis que les bossages axiaux 10 de la première demi-bague 8 pénètrent dans les évidements 11 de la deuxième demi-bague 9. Grâce à cette rotation, la deuxième demi-bague 9 se trouve déportée vers la gauche sur la fig. 3 d'une quantité égale à la dimension en saillie des bossages 10. Ce déplacement vers la gauche suffit pour permettre le montage sans difficulté de la deuxième rangée de billes 19 comportant le même nombre d'éléments roulants que la première rangée 18. Il en résulte que la deuxième rangée de billes 19 présente la même capacité de charge que la première rangée de billes 18.

On fait ensuite subir à la deuxième demi-bague 9 une rotation dans l'autre sens ce qui entraîne un écartement des deux parties de bague 8 et 9, les faces usinées avec précision des bossages 10 respectifs des deux parties 8 et 9 venant à nouveau en contact comme représenté sur les fig. 1 et 2. Cette opération est facilitée par la présence des portions inclinées 12. L'introduction ultérieure des goupilles dans les perçages 13 permet de maintenir l'ensemble convenablement monté.

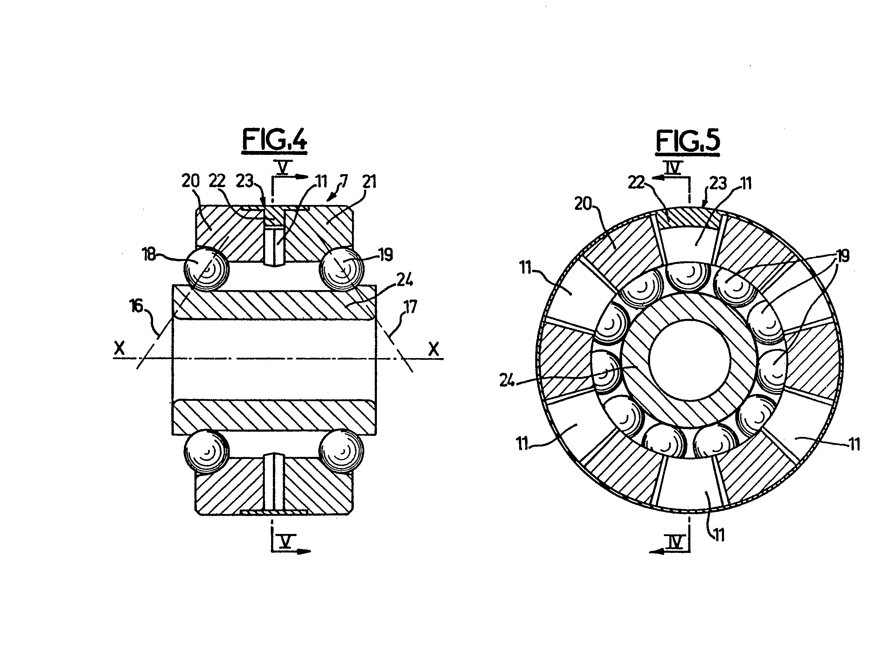

Le mode de réalisation des fig. 4 et 5 dans lequel les éléments analogues portent les mêmes références ne diffère du mode de réalisation précédent que par le fait que les deux demi-bagues 20 et 21 constituant la bague externe 7 ne sont pas goupillées. Dans ce mode de réalisation, le verrouillage en rotation des deux demi-bagues 20 et 21 est assuré par un bossage 22 faisant partie intégrante de l'anneau élastique d'étanchéité 23. Dans le mode de réalisation illustré, l'anneau élastique 23 est réalisé en caoutchouc et il présente, à un endroit de sa périphérie vers l'intérieur, un bossage 22 jouant le rôle de cale et ayant des dimensions lui permettant de venir pénétrer à l'intérieur de l'un des espaces laissés libres par deux évidements 11 comme on peut le voir en particulier sur la fig. 5.

Dans un autre mode de réalisation, le même verrouillage en rotation des deux demi-bagues 20 et 21 pourrait être réalisé par une cale pénétrant dans les évidements 11 mais indépendante de l'anneau d'étanchéité enserrant la bague externe à l'endroit du plan de joint. On notera que la cale ou le bossage 22 peut être monté avec jeu dans l'espace défini par les deux évidements 11, une légère rotation relative des deux demi-bagues l'une par rapport à l'autre n'ayant aucune incidence sur le jeu du fonctionnement du roulement puisque les chemins de roulement de la bague extérieure ont été rectifiés par rapport au plan de référence constitué par la face frontale usinée avec précision des bossages 10.

On notera que dans le mode de réalisation illustré sur les fig. 4 et 5, la bague intérieure monobloc 24 présente une forme cylindrique simple contrairement à ce qui était le cas dans la variante des fig. 1 à 3 appliquée au montage d'une roue de véhicule.

Le nombre de bossages et d'évidements utilisés dans la présente invention est quelconque pourvu qu'il soit au moins égal à deux. Les éléments roulants du palier peuvent être non seulement des billes comme illustré sur les figures, mais également des rouleaux coniques, les deux rangées étant toujours disposées en O.

On notera en outre qu'il n'est pas indispensable que les deux demi-bagues soient de section identique comme cela a été représenté sur les dessins.

Par ailleurs, l'anneau d'étanchéité peut être constitué par un anneau fendu en matière plastique dans le cas où l'on peut admettre pour certaines applications une étanchéité moins parfaite.

**Revendications**

1. Palier à roulement à contact oblique à deux rangées d'éléments roulants, comportant une bague de palier en deux parties maintenues en contact respectif selon un plan de joint radial, caractérisé par le fait que les surfaces frontales en regard des deux parties (8, 9; 20, 21) de la bague de palier, présentent chacune au moins deux bossages axiaux (10) usinés avec précision de façon à constituer une face radiale de référence et séparés par des évidements axiaux (11) adaptés pour recevoir un bossage axial (10) correspondant de l'autre partie de façon à permettre, après rotation relative des deux parties de la bague de roulement, le montage des éléments roulants de la deuxième rangée, le palier comportant en outre un organe périphérique d'étanchéité (15, 23) coopérant avec la bague de palier de façon à obturer les évidements en regard des deux parties de bague de palier lorsque les bossages correspondants des deux parties se trouvent en contact par leur face de référence usinée.

2. Palier à roulement selon la revendication 1, caractérisé par le fait que chaque bossage (10) est relié à un évidement (11) adjacent par une portion inclinée (12) de façon à faciliter la rotation des deux parties de la bague de palier.

3. Palier à roulement selon les revendications 1 ou 2, caractérisé par le fait que les deux parties de bague de palier sont maintenues par des goupilles axiales assurant en outre la position des bossages (10) en contact respectif.

4. Palier à roulement selon l'une quelconque des revendications précédentes, caractérisé par le fait que la bague de palier précitée est la bague externe et que l'organe d'étanchéité est un anneau élastique enserrant la bague externe à l'endroit du plan de joint.

5. Palier à roulement selon les revendications 1 ou 2, caractérisé par le fait qu'il comprend au moins une cale de verrouillage adaptée pour pénétrer dans l'espace laissé entre deux évidements en regard.

6. Palier à roulement selon la revendication 5, caractérisé par le fait que la cale de verrouillage est solidaire de l'organe d'étanchéité.

7. Palier à roulement selon l'une quelconque des revendications précédentes, caractérisé par le fait que l'organe d'étanchéité est un anneau élastique fendu.

8. Palier à roulement selon l'une quelconque des revendications précédentes, caractérisé par le fait que les deux parties de bague de palier sont réalisées par forgeage, matriçage ou frittage leurs pistes de roulement respectives étant usinées par rapport au plan de référence que constituent les faces usinées des bossages axiaux (10).

9. Palier à roulement selon l'une quelconque des revendications précédentes, caractérisé par le fait que les deux rangées d'éléments roulants sont disposées en O.

10. Procédé de montage d'un palier à roulement à contact oblique à deux rangées d'éléments roulants comportant une bague de palier en deux parties selon l'une quelconque des revendications précédentes, caractérisé par le fait qu'on opère de la manière suivante:

on monte la première rangée d'éléments roulants (18), puis la première partie de bague de palier (8) destinée à coopérer avec ladite première rangée;

on monte ensuite la deuxième partie de bague de palier (9) en lui faisant subir une rotation dans un sens de façon que les bossages axiaux (10) de chaque partie pénètrent dans les évidements (11) de l'autre partie;

on monte la deuxième rangée d'éléments roulants (19) comportant le même nombre d'éléments roulants que la première rangée;

on fait ensuite subir à la deuxième partie de bague de palier une rotation dans l'autre sens, ce qui entraîne un écartement des deux parties de bague de palier, les faces usinées avec précision des bossages respectifs des deux parties venant en contact.

**Patentansprüche**

1. Schrägwälzlager mit zwei Reihen Wälzkörper, enthaltend einen Lagerring aus zwei Teilen, die gemäß einer radialen Verbindungsfläche miteinander in Berührung gehalten werden, dadurch gekennzeichnet, daß die gegenüberliegenden Stirnflächen der beiden Teile (8, 9; 20, 21) des Lagerrings jeweils mindestens zwei axiale Buckel enthalten, die so mit Präzision bearbeitet sind, daß sie eine radiale Bezugsfläche bilden und durch axiale Aussparungen (11) getrennt sind, und die so angeordnet sind, daß sie einen entsprechenden axialen Buckel (10) des anderen Teils aufnehmen, um nach einer relativen Drehung der beiden Teile des Lagerrings die Montage der Wälzkörper der zweiten Reihe zu ermöglichen, wobei das Lager ferner ein umfangmäßiges Dichtungsorgan (15, 23) enthält, das mit dem Lagerring so zusammenwirkt, daß es die gegenüberliegenden Aussparungen der beiden Teile des Lagerrings verschließt, wenn sich die entsprechenden Buckel der beiden Teile an ihrer bearbeiteten Bezugsfläche berühren.

2. Schrägwälzlager gemäß Anspruch 1, dadurch gekennzeichnet, daß jeder Buckel (10) mit einer benachbarten Aussparung (11) durch einen schrägen Teil (12) verbunden ist, um die Drehung der beiden Teile des Lagerrings zu erleichtern.

3. Schrägwälzlager gemäß Anspruch 1 oder 2, dadurch gekennzeichnet, daß die beiden Teile des Lagerrings durch axiale Stifte gehalten werden, die ferner die Lage der Buckel (10) sichern, so daß sie gegenseitig in Berührung sind.

4. Schrägwälzlager gemäß einem beliebigen der vorstehenden Ansprüche, dadurch gekennzeichnet, daß es sich bei dem vorgenannten Lagerring um den äußeren Ring handelt und daß es sich bei dem Dichtungsorgan um einen elastischen Ring handelt, der den äußeren Ring in der Höhe der Verbindungsebene einschließt.

5. Schrägwälzlager gemäß den Ansprüchen 1 oder 2, dadurch gekennzeichnet, daß es wenigstens einen Verriegelungskeil enthält, der so eingerichtet ist, daß er in den zwischen zwei gegenüberliegenden Aussparungen freigelassenen Leerraum eindringt.

6. Schrägwälzlager gemäß Anspruch 5, dadurch gekennzeichnet, daß der Verriegelungskeil mit dem Dichtungsorgan fest verbunden ist.

7. Schrägwälzlager gemäß einem beliebigen der vorstehenden Ansprüche, dadurch gekennzeichnet, daß es sich bei dem Dichtungsorgan um einen geschlitzten elastischen Ring handelt.

8. Schrägwälzlager gemäß einem beliebigen der vorstehenden Ansprüche, dadurch gekennzeichnet, daß die beiden Teile des Lagerrings durch Schmieden, Gesenkformen oder Sintern erzeugt werden, wobei die entsprechenden Laufbahnen gegenüber der Bezugsebene, die die bearbeiteten Flächen der axialen Buckel (10) bilden, bearbeitet sind.

9. Schrägwälzlager gemäß einem beliebigen der vorstehenden Ansprüche, dadurch gekennzeichnet, daß die beiden Reihen Wälzkörper O-förmig angeordnet sind.

10. Montageverfahren für ein Schrägwälzlager mit zwei Reihen Wälzkörper, enthaltend einen zweiteiligen Lagerring gemäß einem beliebigen der vorstehenden Ansprüche, dadurch gekennzeichnet, daß man in folgender Weise vorgeht:

Man montiert die erste Reihe Wälzkörper (18), dann den ersten Teil des Lagerrings (8), der mit der genannten ersten Wälzkörperreihe zusammenwirken soll;

dann montiert man den zweiten Teil des Lagerrings (9), indem man ihn in einer Richtung dreht, so daß die axialen Buckel (10) jedes Teils in die Aussparungen (11) des jeweils anderen Teils eindringen;

man montiert die zweite Reihe Wälzkörper (19), die die gleiche Anzahl Wälzkörper enthält, wie die erste Reihe;

dann dreht man den zweiten Teil des Lagerrings in der anderen Richtung, wodurch die beiden Teile des Lagerrings auseinandergedrückt werden, wobei die präzisionsbearbeiteten Flächen der entsprechenden Buckel der beiden Teile in Berührung kommen.

## Claims

1. An oblique contact rolling bearing with two rows of rolling elements, comprising a bearing ring in two parts held in respective contact along a radial joint plane, characterized in that the facing frontal surfaces of the two parts (8, 9; 20, 21) of the bearing ring each have at least two axial bosses (10) precision machined so as to form a radial reference face and separated by axial recesses (11) designed to accommodate a corresponding axial boss (10) on the other part so as, after relative rotation of the two parts of the bearing ring, to allow the rolling elements of the second row to be installed, with the bearing also comprising a peripheral sealing component (15, 23) mating with the bearing ring in such way as to block off the facing recesses of the two parts of the bearing ring when the corresponding bosses of the two parts are in contact through their machined reference face.

2. The rolling bearing according to claim 1, characterized in that each boss (10) is linked to an adjacent recess (11) by an inclined portion (12) so as to facilitate rotation of the two parts of the bearing ring.

3. The rolling bearing according to claims 1 or 2, characterized in that the two parts of the bearing ring are held by axial pins which also ensure the bosses (10) are in position in contact with each other.

4. The rolling bearing according to any of the preceding claims, characterized in that the above-mentioned bearing ring is the outer ring and in that the sealing component is an elastic ring gripping the outer ring at the position of the joint plane.

5. The rolling bearing according to claims 1 or 2, characterized in that it comprises at least one locking piece designed to enter the space left between two facing recesses.

6. The rolling bearing according to claim 5, characterized in that the locking piece is fixed to the sealing component.

7. The rolling bearing according to any of the preceding claims, characterized in that the sealing component is a split elastic ring.

8. The rolling bearing according to any of the preceding claims, characterised in that the two parts of the bearing ring are made by forging, stamping or sintering with their respective bearing races being machined with respect to the reference plane formed by the machined faces of the axial bosses (10).

9. The rolling bearing according to any of the preceding claims, characterized in that the two rows of rolling elements are placed in an O formation.

10. A method of mounting an oblique contact rolling bearing with two rows of rolling elements, comprising a two-part bearing ring according to any of the preceding claims, characterized in that the operation is carried out as follows:

the first row of rolling elements (18) is installed, then the first part of the bearing ring (8) meant to work with the said first row;

then the second part of the bearing ring (9) is installed and is rotated in one direction so that the axial bosses (10) of each part enter the recesses (11) in the other part;

the second row of rolling elements (19), comprising the same number of rolling elements as the first row, is installed;

the second part of the bearing ring is then rotated in the other direction, which makes the two parts of the bearing ring separate and the precision machined faces of the respective bosses of the two parts come into contact.

FIG.1  FIG.2  FIG.3

**FIG.5**

**FIG.4**